# EUROPEAN PATENT SPECIFICATION

(11) **EP 3 450 956 B1**
(45) Date of publication and mention of the grant of the patent: **25.10.2023**
(21) Application number: 17796146.3
(22) Date of filing: 09.05.2017
(51) Int. Cl.: G01N 15/02, G01N 15/14, G06T 7/62, G06V 20/69, G06T 7/00

(54) **PARTICLE ANALYSIS APPARATUS AND PARTICLE ANALYSIS SYSTEM**
PARTIKELANALYSEVORRICHTUNG UND PARTIKELANALYSESYSTEM
APPAREIL D'ANALYSE DE PARTICULES ET SYSTÈME D'ANALYSE DE PARTICULES

(30) Priority: 13.05.2016 JP 2016097033
(43) Date of publication of application: 06.03.2019
(73) Proprietor: Horiba, Ltd., Kyoto-shi, Kyoto 601-8510 (JP)
(72) Inventor: KOSHIKAWA, Hiroyuki, Kyoto-shi Kyoto 601-8510 (JP); MORI, Tetsuya, Kyoto-shi Kyoto 601-8510 (JP); UENO, Kusuo, Kyoto-shi Kyoto 601-8510 (JP)
(74) Representative: Isarpatent
(86) International application number: PCT/JP2017/017573
(87) International publication number: WO 2017/195785

(56) References cited:
- WO-A1-2014/087727
- JP-A- H0 996 602
- JP-A- 2001 245 168
- JP-A- 2009 273 594
- JP-A- 2010 244 320
- JP-A- 2010 244 320
- JP-A- 2014 103 052
- JP-A- 2014 103 052
- US-A1- 2006 280 352
- US-A1- 2010 192 084
- BRIEVA J ET AL: "Evaluation of Segmentation Algorithms for Coronary Angiography", 2007 ANNUAL INTERNATIONAL CONFERENCE OF THE IEEE ENGINEERING IN MEDICINE AND BIOLOGY SOCIETY : [EMBC '07] ; LYON, FRANCE, 22 - 26 AUGUST 2007 ; [IN CONJUNCTION WITH THE BIENNIAL CONFERENCE OF THE SOCIÉTÉ FRANÇAISE DE GÉNIE BIOLOGIQUE ET MÉDICAL (SFGB, 22 August 2007 (2007-08-22), pages 5555-5558, XP031337484, ISBN: 978-1-4244-0787-3

## Description

### Technical Field

The present invention relates to a particle analysis apparatus and a particle analysis system used for performing analysis of particles based on an image of the particles.

### Background Art

For example, to confirm whether particles manufactured in a predetermined process have realized a desired particle property, analysis may be performed based on a raw image of particles in a dispersion medium.

As the particle property to be confirmed here, there are various particle properties in accordance with purposes, including: whether dispersion of a particle diameter distribution is small and the particles are uniformly aligned; whether shapes of the particles are uniform; whether the particles are aggregated; what are sizes and the shapes of the respective particles in a case where the particles are aggregated; etc.

However, the raw image described above is not necessarily a suitable image for observing the aforementioned particle property to be confirmed. For example, due to an unclear outline of each of the particles, it may be difficult to discriminate the shapes of the particles, and even when the aggregation is predicted, it may be difficult to discriminate a detailed shape of an aggregate and each of the particles forming the aggregate.

Thus, a predetermined image processing algorithm may be executed on the raw image to generate an image with the highlighted particle property to be confirmed and various types of analysis may be performed based on such an image subjected to the image processing. More specifically, the outline of each particle is highlighted, thereby making it easy to confirm the shapes and distribution of the particles, as illustrated in

### Patent Literature 1.

However, there are various types of image processing algorithms, and an obtained final image greatly differs depending on which of the image processing algorithms is applied to the raw image. Thus, an unskilled person who does not completely recognize a property of each of the large number of image processing algorithms has difficulties in immediately selecting the appropriate image processing algorithm in accordance with the particle property to be confirmed.

Therefore, the unskilled person repeats trial and error in confirming an image obtained by trying to execute one of the image processing algorithms and, in a case where the desired particle property is not outstanding, trying another one of the image processing algorithms.

### Citation List

### Patent Literature

Patent Literature 1: Japanese Patent Application Laid-open No. 2016-11224
US 2006/280352 A1 describes systems and methods for performing image analysis.
JP 2010244320 A describes an image processor which allows to set pre-processing for inspection of an object.
US 2010/192084 A1 describes automated image screening operations.

### Summary of Invention

### Technical Problem

In view of the problem described above, the present invention has been made, and it is an object of the present invention to provide a particle analysis apparatus and a particle analysis system permitting, for example, even an unskilled person to immediately select an image processing algorithm in accordance with a purpose to easily obtain a suitable image for particle property analysis.

### Solution to Problem

Specifically, a particle analysis apparatus according to the present invention includes a particle analysis apparatus according to claim 1.

With such configuration, the list of the test result images with the different image processing algorithms each executed is displayed, so that a user can compare the test result images and thus can immediately recognize which of the image processing recipes can be used to obtain an image which has been subjected to image processing and which is in accordance with a purpose.

Therefore, based on the test result images, the user can execute, on the raw image, any of the stored image processing recipes which can provide the test result image most in accordance with the purpose of the analysis, and, for example, without repeating trial and error, the user can obtain, from the raw image, the image which has a highlighted particle property to be confirmed and which has been subjected to the image processing.

The invention permits selection of the more appropriate image processing recipe by permitting execution of the image processing algorithm on only a portion of the raw image where the particle property to be confirmed appear to be well expressed and making it easy to express a difference in processing results between the test result images, a test region setting section setting, based on received input from the user, a test region in the raw image region where the image processing algorithm is executed is included. Moreover, with such configuration, the image processing algorithm is executed only on the part of the raw image, thus reducing calculation loads, which permits reduction in time required for displaying the test result images.

To makes it possible to set an appropriate test region, for example, on a portion of the raw image data, at which particle aggregation occurs, in accordance with a size and a shape of the portion or to make it easy to obtain target image processing results by permitting inclusion of both bright and dark portion in the test region even in a case where there is a great contrast difference in the raw image, the test region setting section may be configured so as to set a position, a size, or a shape of the test region in the raw image.

To permit even an unskilled person to easily obtain the test result images obtained by executing the respective image processing algorithms on the raw image without requiring complicated setting, the image processing recipe may include: the image processing algorithm and a setting parameter of the image processing algorithm.

To permit the user to select the most suitable image processing recipe for the analysis based on the test result images and perform desired analysis with the image subjected to the image processing, the invention further includes an execution recipe reception section receiving, from the user, selection of the image processing recipe to be executed on the entire raw image after the test result images have been displayed by the test result display section; a final image processing section executing, based on the image processing recipe received at the execution recipe reception section, image processing on the entire raw image and outputting a final image; and a final result display section displaying the final image.

For example, to permit comparison of results, such as numerical data and a graph, of the particle property obtained outside of the particle analysis apparatus with the particle property obtained from the final image subjected to the appropriate image processing to thereby confirm, for example, whether there is any problem in the particle property measurement, further included may be: an analysis section analyzing a particle property of the particles in the final image based on the final image; and a comparison section comparing a particle property of the particles measured based on different measurement principles from measurement principles of the particle analysis apparatus with the particle property analyzed based on the final image at the analysis section.

With a particle analysis system including: the particle analysis apparatus according to the present invention; and a particle observation device including a imaging mechanism for imaging particles, wherein the raw image storage section is configured so as to store, as the raw image, the image imaged in the particle observation device, for example, it is possible to measure each particle property while confirming a particle state after the image processing and, almost simultaneously with the measurement, also review whether measurement results are adequate.

To permit the user to compare results obtained by performing, on the raw image, the image processing according to the plurality of image processing algorithms and easily select the image processing algorithm in accordance with the purpose of the analysis in the existing particle analysis apparatus, a particle analysis apparatus program according to claim 6 is used.

Moreover, the particle analysis apparatus program may be stored in a recording medium such as a CD, a DVD, a flash memory, or a hard disc.

### Advantageous Effects of Invention

With the particle analysis apparatus according to the present invention as described above, the image processing is performed on at least a part of the raw image according to the plurality of image processing algorithms and a list of the respective test result images is displayed, thus permitting the user to compare the test result images and easily determine which of the image processing recipes includes the most suitable image processing algorithm for the purpose of the analysis. Therefore, even an unskilled person can easily create, from the raw image in short time, the image which is suitable for the analysis and which has been subjected to the image processing.

### Brief Description of Drawings

[FIG. 1]

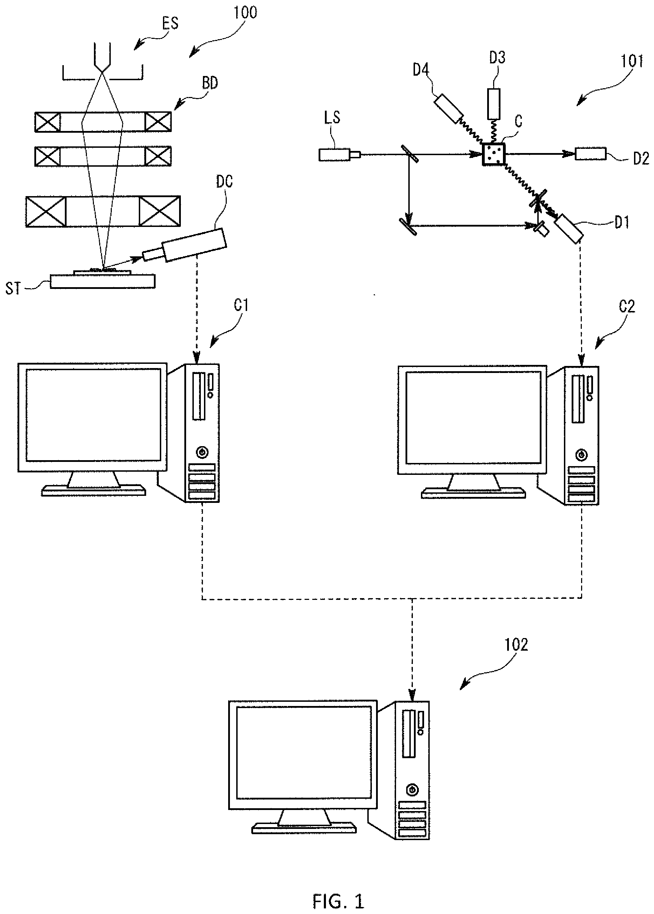

   FIG. 1 is a schematic diagram illustrating a particle analysis apparatus and a particle analysis system according to a first embodiment of the present invention.
[FIG. 2]

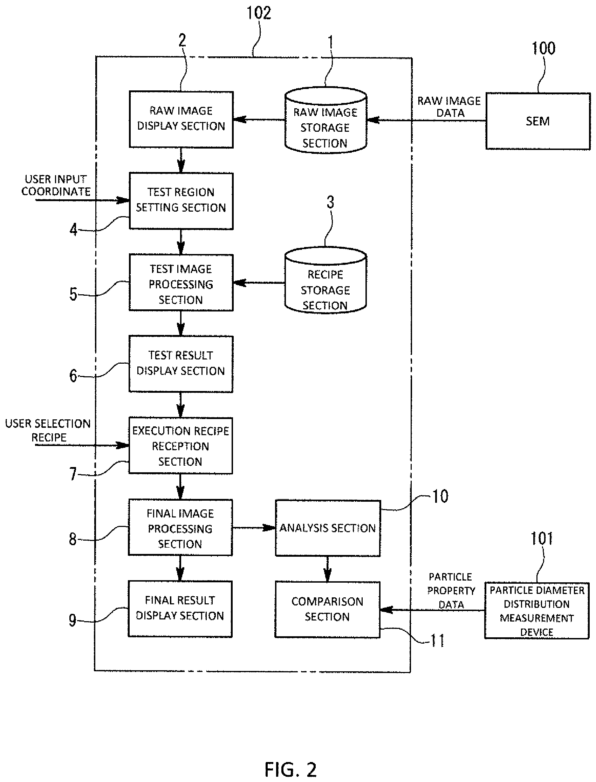

   FIG. 2 is a functional block diagram of the particle analysis apparatus in the first embodiment.
[FIG. 3]

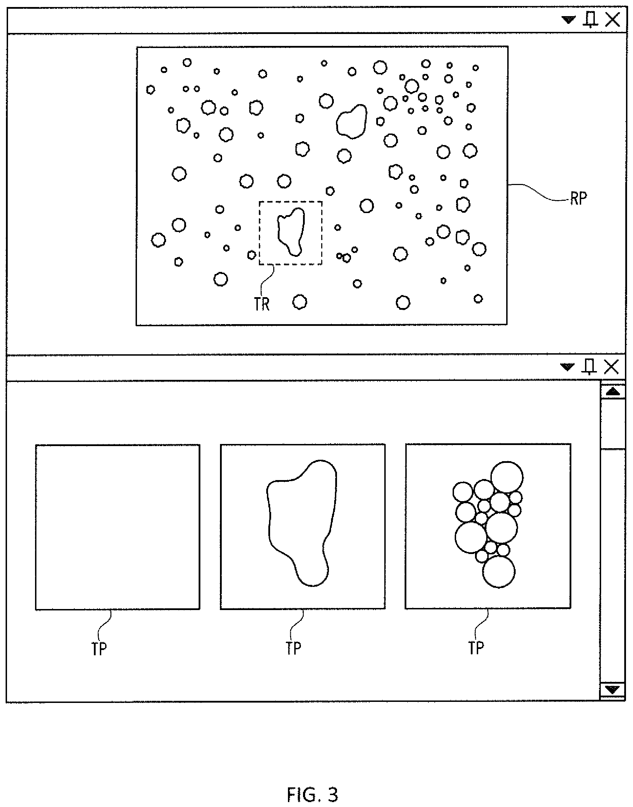

   FIG. 3 is a pattern diagram illustrating a display mode of each test result image provided by a test result display section in the first embodiment.
[FIG. 4]

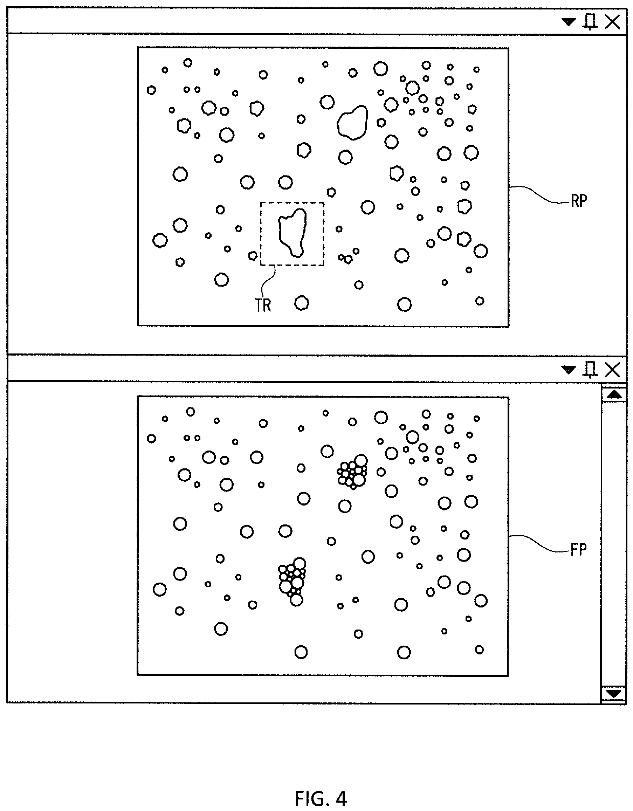

   FIG. 4 is a pattern diagram illustrating a display mode of a final image provided by a final result display section in the first embodiment.
[FIG. 5]

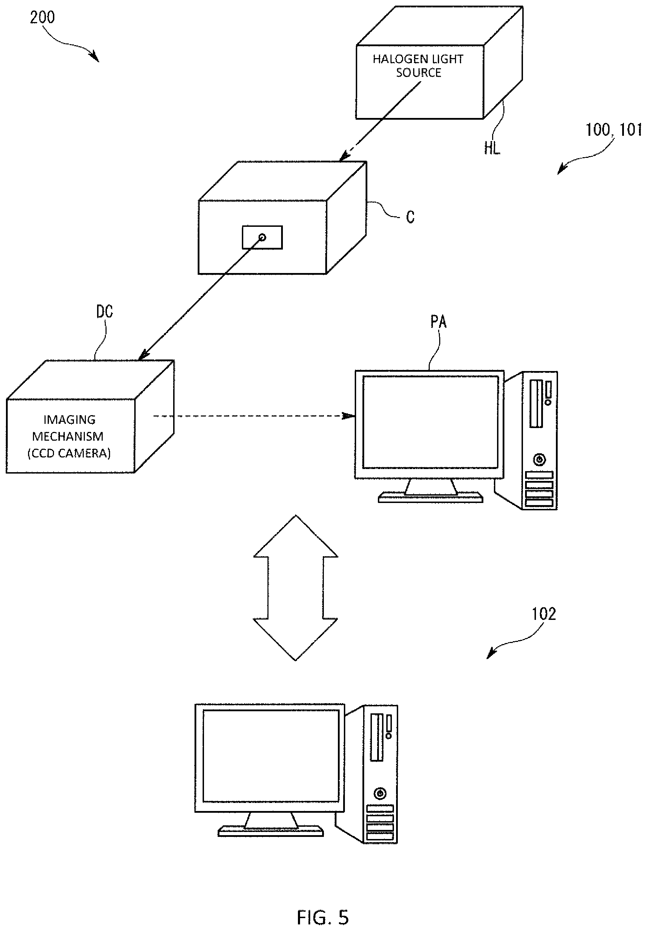

   FIG. 5 is a schematic diagram illustrating a particle analysis apparatus and a particle analysis system according to a second embodiment of the present invention.
[FIG. 6]

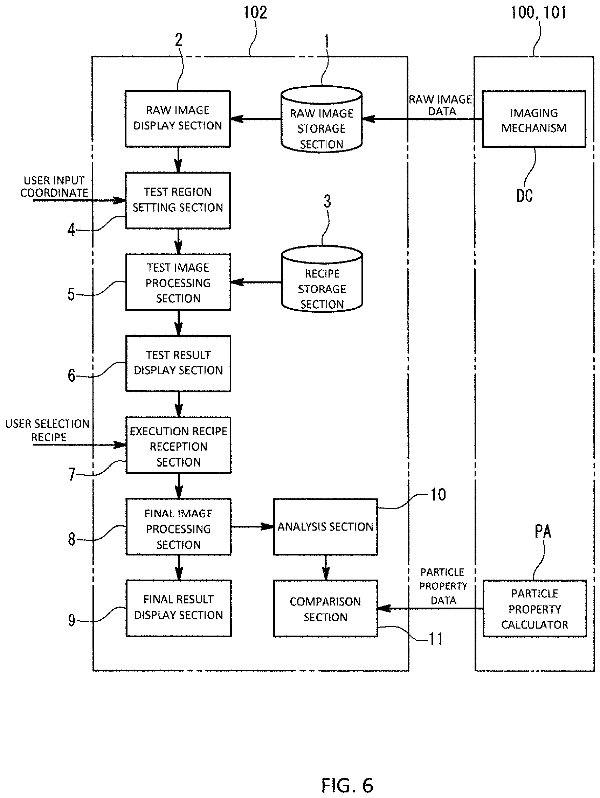

   FIG. 6 is a functional block diagram of the particle analysis apparatus in the second embodiment.

### Reference Signs List

- 200: Particle analysis system
- 100: Particle observation device
- 101: Particle diameter distribution measurement device
- HL: Light source
- C: Cell
- DC: Imaging mechanism
- PA: Particle property calculator
- 102: Particle analysis apparatus
- 1: Raw image storage section
- 2: Raw image display section
- 3: Recipe storage section
- 4: Test region setting section
- 5: Test image processing section
- 6: Test result display section
- 7: Execution recipe reception section
- 8: Final image processing section
- 9: Final result display section
- 10: Analysis section
- 11: Comparison section
- RP: Raw image
- TP: Test result image
- FP: Final image

### Description of Embodiments

A particle analysis apparatus 102 according to a first embodiment of the present invention will be described with reference to the drawings. The particle analysis apparatus 102 of the first embodiment executes a predetermined image processing algorithm on a raw image RP of particles and displays, on a display, an image subjected to image processing. Moreover, the particle analysis apparatus 102 is configured so as to calculate a property of the imaged particles or particle group based on a final image FP obtained by performing the image processing on the raw image, and to permit comparison with a value measured not via the particle analysis apparatus 102.

The raw image RP is imaged by, for example, a scanning electronic microscope (SEM) 100 as one type of a particle observation device. Moreover, for example, a particle diameter distribution measurement device 101 as one type of a particle property measurement device can be used as a device which actually measures the property of the particles without imaging the particles themselves. That is, in the first embodiment, the SEM 100 as the particle observation device, the particle diameter distribution measurement device 101 as the particle property measurement device, and the particle analysis apparatus 102 form a particle analysis system 200.

Each of the devices forming the particle analysis system 200 will be described. The SEM 100 includes: a sample table ST on which particles are loaded; an electron source ES which emits an electron beam to the particles; a beam deflection mechanism BD which deflects the electron beam emitted from the electron source ES and performs scanning on the sample base ST; a imaging mechanism DC which images the particles by a signal of, for example, a secondary electron beam or a reflected electron generated from the particles irradiated with the electron beam, an absorption current; and a computer C1 which controls the electron source ES, the beam deflection mechanism BD, and the imaging mechanism DC and also which stores the raw image RP of the imaged particles. The raw image RP of the particles imaged by the imaging mechanism DC and stored in the computer C1 is transmitted to and stored in the particle analysis apparatus 102.

The particle diameter distribution measurement device 101 irradiates laser light to the particles dispersed in a dispersion medium and measures a particle diameter distribution of the particles based on scattered light of the laser light scattered by the particles. More specifically, the particle diameter distribution measurement device 101 includes: a laser light source LS from which laser light is emitted; a cell C which stores therein the dispersion medium and the particles; a plurality of detectors D1, D2, D3, and D4 which are arranged around the cell C; and a particle diameter distribution calculator C2 which is formed of a computer for calculating the particle diameter distribution based on part or all of outputs of the detectors. Here, for example, photomultipliers are used as the detectors. The particles in the dispersion medium may be those which are equal to the particles imaged by the particle observation device or may be those which are separately collected from the same sample from which the imaged particles have been collected.

The particle diameter distribution calculator C2 is configured so as to calculate the particle diameter distribution of the particles in the dispersion medium by a dynamic light scattering method, for example, based on intensity signals of the scattered light obtained from the side detector D3 which detects side scattering light and the rear scattered light rear detector D4. The particle diameter distribution as a particle property calculated by the particle diameter distribution calculator C2 is also transmitted to the particle analysis apparatus 102.

Next, the particle analysis apparatus 102 will be described. The particle analysis apparatus 102 is formed of, for example, a computer provided with input and output means including a CPU, a memory, an A/D and D/A converter, and a display. Then as a result of execution of a particle analysis apparatus program stored in the memory, the particle analysis apparatus 102 is configured so as to at least realize functions as a raw image storage section 1, a raw image display section 2, a recipe storage section 3, a test region setting section 4, a test image processing section 5, a test result display section 6, an execution recipe reception section 7, a final image processing section 8, and a final result display section 9, as illustrated in FIG. 2. Image processing is performed on the raw image RP according to the predetermined image processing algorithm in the particle analysis apparatus 102, and based on an image obtained as a result of the image processing, the user performs analysis and review of the particle property.

Hereinafter, functions and operation of each of the sections will be described. Note that the description below refers to, as an example, a case where outlines of the particles in the raw image RP is unclear and there is also an aggregated portion. Moreover, in the present embodiment, for the purpose of the analysis, the user is intended to confirm a shape and a size of each particle forming the aggregated portion by executing the image processing algorithm on the raw image RP by use of the particle analysis apparatus 102.

The raw image storage section 1 acquires, from the computer C1 of the particle observation device, the raw image RP as an image of the particles. The raw image RP here is compressed or uncompressed digital photo data which is saved in a predetermined data format in the imaging mechanism DC. The data format of the raw image RP is not specifically limited, and for example, the data may be outputted from the SEM 100 and not subjected to image processing in the particle analysis apparatus 102.

The raw image display section 2 directly displays the raw image RP stored in the raw image storage section 1 on an upper half region of the display as illustrated in FIG. 3. Illustrated in the present embodiment is a case where, on the raw image RP generated by the raw image display section 2, each of the particles has an unclear outline, only a rough outer shape of a section where the particles are expected to aggregate is expressed, and a detailed structure thereof is hardly discriminated.

The recipe storage section 3 previously stores at least a plurality of image processing recipes with different image processing algorithms. The image processing recipe here is a command inputted to the test image processing section 5 or the final image processing section 8, and a program and processing to be executed are determined based on this command. The test image processing section 5 or the final image processing section 8 consequently performs different processing or outputting for each type of the inputted image processing recipes.

Describing a data structure of the image processing recipe in detail, the image processing recipe includes a pair of data related to the image processing algorithm and data related to a setting parameter required for operating the image processing algorithm. A plurality of types of this image processing recipe is previously set in order to permit support of various types of particle analysis. Examples of the image processing algorithm include: watershed, Morphology operation, Hough transform, and binarization processing as those which find out a boundary between the particles or a boundary between the particles and a background. Examples of the image processing algorithms as those which remove noise of the image include: a moving average filter and Fourier transform. The setting parameter refers to, for example, a structuring element for the Morphology operation and a filter size for the moving average filter. In the present embodiment, the at least two image processing algorithms are used and provided as mutually separate image processing recipes. Note that the image processing recipes may have different setting parameters while using the same image processing algorithm.

Based on a received input from the user, the test region setting section 4 sets a test region TR in the raw image RP on which the image processing algorism is executed. The test region setting section 4 receives coordinate data on the raw image RP inputted through a pointing device such as a mouse by the user, and sets, as the test region TR, a region on the raw image RP partitioned by dots as illustrated in FIG. 3. That is, the user can set the test region TR of a rectangular shape partitioned into a desired shape at a desired place on the raw image RP. In the present embodiment, the user desires to analyze a detailed structure of the aggregated portion, and thus the test region TR is set so as to surround a portion on the displayed raw image RP where great aggregation with a large mass is formed with high possibility.

The test image processing section 5 sequentially or simultaneously and parallelly executes, on a portion of the raw image RP where the test region TR is set, image processing according to the plurality of image processing recipes stored in the recipe storage section 3. Then the test image processing section 5 outputs data of a test result image TP corresponding to each of the image processing recipe, that is, each of the image processing algorithms.

The test result display section 6 simultaneously displays, on the display, test result images TP with the different image processing algorithms each outputted from and executed by the test image processing section 5. More specifically, a list of the test result images TP is displayed in a line at a page region located at a lower half of FIG. 3. Note that in a case where an even larger number of test result images TP are present, page scroll permits simultaneous display thereof. Further, the plurality of test result images may be displayed over a plurality of displays.

In the present embodiment, as illustrated on a first test result image TP, an object located in the test region TR has disappeared with the first image processing recipe. On a second test result image TP, the aggregated particles are detected as one large particle and the particles forming the aggregated portion cannot individually be detected. On a third test result image TP, each of the particles forming the aggregated portion can be detected. As described above, since the rest result images TP are simultaneously displayed on one screen, the user who desires to individually analyze the particles in an aggregated state can intuitively understand that the image processing according to the third image processing recipe is most suitable for the analysis of the aggregated portion.

After each test result image TP is displayed by the test result display section 6, the execution recipe reception section 7 receives, from the user, selection of the image processing recipe to be executed on the entire raw image RP. For example, selections for determining which of the image processing recipes stored in the recipe storage section 3 is used for performing image processing on the raw image RP are hop-up displayed on the screen. In this example, the user selects, from the display of the rest result images TP, the image processing according to the third image processing recipe through the mouse or the keyboard, and input of this selection is received as an execution recipe by the execution recipe reception section 7.

The final image processing section 8 executes the image processing on the entire raw image RP based on the image processing recipe received at the execution recipe reception section 7 and outputs the final image FP.

The final result display section 9 simultaneously displays, for example, the raw image RP and the final image FP as illustrated in FIG. 4. On the final image FP in this example, for not only the aggregated portion included in the test region TR but also for an aggregated portion located outside of the set test region TR, even each of the particles forming the aggregation is also detected.

The analysis section 10 analyzes the particle property of the particles in the image based on the final image FP. In the present embodiment, the particle diameter distribution is calculated based on the final image FP. Moreover, the analysis section 10 is configured so as to calculate the particle diameter distribution based on the final image FP according to an arithmetic algorithm different from that of the particle diameter distribution measurement device 101. For example, the analysis section 10 calculates a size of each of the particles in the final image FP based on the number of pixels occupied by each of the aforementioned particles to calculate the particle diameter distribution.

The comparison section 11 compares the particle diameter distribution as the particle property obtained by the particle diameter distribution measurement device 101 with the particle diameter distribution as the particle property obtained from the final image FP processed according to the image processing algorithm. For example, graphs of the respective particle diameter distributions are simultaneously displayed on the display.

With the particle analysis apparatus 102 configured as described above, a portion of the raw image RP of the particles in the dispersion medium can be subjected to the image processing according to the plurality of different image processing algorithms and the list of the test result images TP as respective results of the image processing can simultaneously be displayed.

Therefore, the user can compare the plurality of test result images TP displayed on the display and can easily discriminate which of the image processing recipes includes the most suitable image processing algorithm for the analysis of the particle property desired by the user.

Thus, the user can easily obtain, in short time, the final image FP subjected to the image processing algorithm in accordance with the purpose of the analysis even though he or she is an unskilled person who is not so familiar with characteristics of the image processing algorithm, etc.

Further, the test region setting section 4 can set, in a desired manner, the test region TR to be subjected to a test of the image processing algorithm based on the input of the user. Thus, for example, the user can set, in the test region TR, only a target in the raw image RP he or she desires to analyze. In this case, it is easy to realize the most suitable image processing for the target to be analyzed.

Moreover, in a case where there is a great contrast difference in the raw image RP, the user can also set the test region TR so as to include both bright and dark regions. In this case, it is possible to search for what permits realization of the image processing in view of the contrast difference.

In addition, since the image processing according to the image processing algorithm is performed on only part of the raw image RP, calculation loads can be reduced and time required for outputting and displaying each test result image TP can be shortened. Thus, it is possible for the user to select the image processing recipe including the suitable image processing algorithm for the analysis without taking too much time.

Further, the user can view the final image FP to thereby confirm whether measurement results of the particle property outputted from the particle diameter distribution measurement device 101 is adequate.

Next, a second embodiment of the present invention will be described with reference to FIGS. 5 and 6. Note that, in the description below, members corresponding to the members already described in the first embodiment are provided with the same reference numerals.

A particle analysis system 200 of the second embodiment is configured so as to perform particle imaging and particle property measurement not on individual devices but on particle diameter distribution measurement devices 100 and 101 which combine together functions of a particle observation device and a particle property measurement device in a single device. Specifically, the particle analysis system 200 includes: the particle diameter distribution measurement devices 100 and 101 which imag particles and calculate a particle diameter distribution based on a imaged image; and a particle analysis apparatus 102 which executes various image processing algorithms on a raw image RP of the particles. In the second embodiment, data indicating the raw image RP outputted from the particle diameter distribution measurement devices 100 and 101 is acquired and stored by the particle analysis apparatus 102.

First, the particle diameter distribution measurement devices 100 and 101 of the second embodiment will be described. As illustrated in FIG. 5, the particle diameter distribution measurement devices 100 and 101 have a halogen light source HL and a imaging mechanism DC provided on a straight line with a cell C as a center which stores therein a dispersion medium including the particles. That is, the image of the particles in the dispersion medium is imaged by transmitted light which is included in light emitted from the halogen light source HL and which passes through the cell C. Further, the particle observation device includes a particle property calculator PA which calculates a particle property based on the data of the raw image RP outputted from the imaging mechanism DC.

The particle property calculator PA is formed of, for example, a computer provided with input and output means including a CPU, a memory, an AC/DC converter, and a display. That is, the particle property calculator PA is configured so as to calculate the particle property from the data of the raw image RP as a result of execution of a particle observation device program stored in the memory. The particle property calculator PA in the present embodiment calculates a size of each of the particles based on the raw image RP and calculates a particle diameter distribution as the particle property. More specifically, the particle property calculator PA is configured so as to extract a region with the particles based on, for example, a luminance difference in the raw image RP and calculate a size of the particles based on the number of pixels forming the aforementioned region. The particle property calculator PA generates and outputs a graph and numerical data indicating appearance frequency for a particle diameter, as described above.

Note that the particle property to be measured is not limited to the particle diameter distribution and may be, for example, shapes of the particles and colors of the particles.

Next, the particle analysis apparatus 102 of the second embodiment will be described. As illustrated in FIG. 6, each of sections forming the particle analysis apparatus 102 are same as those of the first embodiment, although a target for which the raw image RP is acquired and a target for which the particle diameter distribution as the particle property is acquired differ from those of the first embodiment. More specifically, a raw image storage section 1 is configured so as to acquire and store the data of the raw image RP from the imaging mechanism DC of the particle observation device. Moreover, a comparison section 11 is configured so as to acquire, from the particle property calculator PA of the particle observation device, data of an actually measured particle diameter distribution to be compared with a particle diameter distribution calculated from a final image FP.

Even such a particle analysis system 200 and a particle analysis apparatus 102 of the second embodiment can provide the same effects as those provided by the particle analysis system 200 and the particle analysis apparatus 102 of the first embodiment.

Other embodiments will be described.

The raw image acquired by the particle analysis apparatus is not limited to those imaged by the SEM and may be an image of the particles in the dispersion medium by, for example, a microscope. That is, the raw image acquired by the particle analysis apparatus may be an image of the particles, and a process of generating the raw image is not specifically limited. Moreover, the raw image is not only monochromatic but may be a grayscale or color image. Further, the raw image is not limited to a secondary electron beam image as that of the first embodiment but may be an optical image. The raw image may also be such an image that has spectrum information in each pixel and which is imaged by an X-ray microscope or a Raman microscope.

The raw image, the test result images, and the final image may be still images or may be moving images in which a plurality of still images are arrayed in chronological order. For example, the test image processing section may receive, as the raw image, a moving image including a plurality of still images and execute a plurality of image processing algorithms on this moving image and the test result display section may display a list of the plurality of moving images as a plurality of test result images. Further, the final image processing section may execute, on the entire region of the raw image, the image processing algorithm selected by the user and then the final result display section may display the moving image as a final image.

Moreover, the test image processing section may receive the still image as raw image data and execute the plurality of image processing algorithms, and the image processing algorithm selected by the user may be executed on another moving image in the final image processing section.

The embodiment has been described above, referring to a case where the image processing recipe for displaying the aggregated portion in more detail is selected, but the particle analysis apparatus according to the present invention may be used for other purposes. For example, to accurately analyze an outer shape of the aggregated part rather than details of each particle for the aggregated portion, the image processing recipe for detecting only an outline of the aggregated portion may be selected. Moreover, to observe only general outline of the particles or a state in which the particles are aggregated, the suitable image processing algorithm for such image processing that blurs the raw image instead of sharpening the raw image may be found from the display of the list of test images by the particle analysis apparatus.

In the embodiment described above, the image processing according to the plurality of image processing recipes is executed for one raw image to finally obtain one final image. However, for example, after the most suitable image processing recipe for the analysis of the single raw image is selected by the user, batch processing may be performed on other plural raw images. Moreover, a shape of the test region set by the test region setting section is not limited to the rectangular shape and may be a polygonal shape such as a circle, an oval, or a triangle or a closed region defined by a free curve inputted by the user.

The image processing recipe may include only the image processing algorithm or may include the image processing algorithm and information of those other than the setting parameter of the image processing algorithm. For example, the image processing recipe may include the image processing algorithm, the setting parameter, and even a particle property calculation algorism executed on the image generated according to the image processing algorithm, and a test result image may be generated from the raw image at the test image processing section and a particle property calculation test may also be performed based on the test result image. For example, permitting, on the display, comparison of the particle properties together with comparison of the test result images on which the respective image processing recipes have been executed makes it possible to easily select the one for which the processing in accordance with the purpose has been executed.

The particle diameter distribution measurement performed by the particle diameter distribution measurement device is not limited to those based on a pixel size, and for example, a diffusion coefficient may be obtained based on particle movement and the particle diameter distribution may be calculated based on this diffusion coefficient. Moreover, the particle property analysis performed by the analysis section may be based on a different arithmetic algorithm from that of the particle property measurement device. In addition, configuration such that the analysis section and the comparison section are omitted from the particle analysis apparatus and such that a function of displaying even the final image is included may be provided. Moreover, configuration such that the test region setting section is omitted from the particle analysis apparatus and such that the image processing algorithm is constantly carried out on the entire raw image to obtain the test result image may be provided. Moreover, to permit integration of the various functions in order to perform the particle imaging and the particle property measurement with the single device as is the case with the second embodiment, for example, an optical microscope and a particle diameter distribution measurement device based on a static scattering method may be integrated.

For example, a dual display may be used as the display for displaying the raw image, the test result images, and the final image displayed by the particle analysis apparatus. This makes it possible to display the raw image on one of the displays and display the test result images on the other of the displays to easily obtain effects of the image processing, permitting the user to select the more appropriate image processing recipe.

### Industrial Applicability

The present invention can provide a particle analysis apparatus permitting even an unskilled person to easily create, based on a raw image in short time, an image which has been subjected to image processing and which is suitable for analysis.

## Claims

1. A particle analysis apparatus (102) comprising:
a raw image storage section (1) storing a raw image (RP) of particles;
a recipe storage section (3) storing a plurality of image processing recipes that are different in at least image processing algorithms;
a test region setting section (4) which is configured for setting, based on received input from a user, a test region (TR) in the raw image (RP) where the image processing algorithm is executed;
a test image processing section (5) configured to execute the plurality of image processing algorithms on a portion of the raw image (RP) where the test region (TR) is set based on the plurality of image processing recipes stored in the recipe storage section (3) and to output respective test result images (TP);
a test result display section (6) configured to display a list of the test result images (TP) with the different image processing algorithms each outputted from and executed by the test image processing section (5);
an execution recipe reception section (7) configured to receive, from a user, a selection of the image processing recipe to be executed on the entire raw image (RP) after each test result image (TP) of the list has been displayed by the test result display section (6);
a final image processing section (8) configured to execute, based on the image processing recipe received at the execution recipe reception section (7), image processing on the entire raw image (RP) or entire another raw image of the particles and to output a final image (FP); and
a final result display section (9) configured to display the final image (FP).

2. The particle analysis apparatus (102) according to claim 1, wherein
the test region setting section (4) is configured so as to set a position, a size, or a shape of the test region in the raw image (RP).

3. The particle analysis apparatus (102) according to claim 1, wherein
the image processing recipe includes: the image processing algorithm and a setting parameter of the image processing algorithm.

4. The particle analysis apparatus (102) according to claim 1, further comprising:
an analysis section (10) configured to analyze a particle property of the particles in the final image based on the final image; and
a comparison section (11) configured to compare a particle property of the particles measured based on different measurement principles from measurement principles of the particle analysis apparatus (102) with the particle property analyzed based on the final image (FP) at the analysis section (10).

5. A particle analysis system (200) comprising:
the particle analysis apparatus (102) according to claim 1; and
a particle observation device including an imaging mechanism (DC) for imaging particles, wherein
the raw image storage section (1) is configured so as to store, as the raw image (RP), an image imaged in the particle observation device.

6. A particle analysis apparatus program causing a computer to exert functions such that:
a raw image storage section (1) stores a raw image of particles;
a recipe storage section (3) stores a plurality of image processing recipes that are different in at least image processing algorithms;
a test region setting section (4) sets, based on received input from a user, a test region (TR) in the raw image where the image processing algorithm is executed;
a test image processing section (5) executes the plurality of image processing algorithms on a portion of the raw image (RP) where the test region (TR) is set based on the plurality of image processing recipes stored in the recipe storage section and outputting respective test result images;
a test result display section simultaneously displays, on a display, the test result images with the different image processing algorithms each outputted from and executed by the test image processing section;
an execution recipe reception section (7) receives, from a user, a selection of the image processing recipe to be executed on the entire raw image (RP) after each test result image (TP) of the list has been displayed by the test result display section (6);
a final image processing section (8) executes, based on the image processing recipe received at the execution recipe reception section (7), image processing on the entire raw image (RP) or entire another raw image of the particles and outputs a final image (FP); and
a final result display section (9) displays the final image (FP).

## Patentansprüche

1. Partikelanalysevorrichtung (102), umfassend:
einen Rohbild-Speicherabschnitt (1), der ein Rohbild (RP) von Partikeln speichert;
einen Rezept-Speicherabschnitt (3), der mehrere Bildverarbeitungsrezepte speichert, die sich zumindest in den Bildverarbeitungsalgorithmen unterscheiden;
einen Testbereich-Einstellabschnitt (4), der zum Einstellen eines Testbereichs (TR) in dem Rohbild (RP), in dem der Bildverarbeitungsalgorithmus ausgeführt wird, basierend auf einer empfangenen Eingabe von einem Benutzer eingerichtet ist;
einen Testbild-Verarbeitungsabschnitt (5), der eingerichtet ist, um die mehreren Bildverarbeitungsalgorithmen an einem Teil des Rohbildes (RP) auszuführen, in dem der Testbereich (TR) basierend auf den mehreren Bildverarbeitungsrezepten eingestellt ist, die in dem Rezept-Speicherabschnitt (3) gespeichert sind, und um jeweilige Testergebnisbilder (TP) auszugeben;
einen Testergebnis-Anzeigeabschnitt (6), der eingerichtet ist, eine Liste der Testergebnisbilder (TP) mit den unterschiedlichen Bildverarbeitungsalgorithmen anzuzeigen, die jeweils von dem Testbild-Verarbeitungsabschnitt (5) ausgegeben und ausgeführt werden;
einen Ausführungsrezept-Empfangsabschnitt (7), der eingerichtet ist, um von einem Benutzer eine Auswahl des Bildverarbeitungsrezepts zu empfangen, das auf dem gesamten Rohbild (RP) auszuführen ist, nachdem jedes Testergebnisbild (TP) der Liste durch den Testergebnis-Anzeigeabschnitt (6) angezeigt worden ist;
einen Endbild-Verarbeitungsabschnitt (8), der eingerichtet ist, um basierend auf dem Bildverarbeitungsrezept, das an dem Ausführungsrezept-Empfangsabschnitt (7) empfangen wird, eine Bildverarbeitung an dem gesamten Rohbild (RP) oder einem gesamten anderen Rohbild der Partikel auszuführen und ein Endbild (FP) auszugeben; und
einen Endergebnis-Anzeigeabschnitt (9), der eingerichtet ist, um das Endbild (FP) anzuzeigen.

2. Partikelanalysevorrichtung (102) nach Anspruch 1, wobei der Testbereich-Einstellabschnitt (4) eingerichtet ist, um eine Position, eine Größe oder eine Form des Testbereichs in dem Rohbild (RP) einzustellen.

3. Partikelanalysevorrichtung (102) nach Anspruch 1, wobei das Bildverarbeitungsrezept umfasst: den Bildverarbeitungsalgorithmus und einen Einstellparameter des Bildverarbeitungsalgorithmus.

4. Partikelanalysevorrichtung (102) nach Anspruch 1, ferner umfassend:
einen Analyseabschnitt (10), der eingerichtet ist, um eine Partikeleigenschaft der Partikel in dem Endbild basierend auf dem Endbild zu analysieren; und
einen Vergleichsabschnitt (11), der eingerichtet ist, um eine Partikeleigenschaft der Partikel, die basierend auf unterschiedlichen Messprinzipien von Messprinzipien der Partikelanalysevorrichtung (102) gemessen wird, mit der Partikeleigenschaft zu vergleichen, die basierend auf dem Endbild (FP) an dem Analyseabschnitt (10) analysiert wird.

5. Partikelanalysesystem (200), umfassend:
die Partikelanalysevorrichtung (102) nach Anspruch 1; und
eine Partikelbeobachtungsvorrichtung, die einen Abbildungsmechanismus (DC) zum Abbilden von Partikeln umfasst, wobei
der Rohbild-Speicherabschnitt (1) eingerichtet ist, um als Rohbild (RP) ein Bild zu speichern, das in der Partikelbeobachtungsvorrichtung abgebildet wird.

6. Partikelanalysevorrichtungsprogramm, das einen Computer veranlasst, Funktionen auszuführen, so dass:
ein Rohbild-Speicherabschnitt (1) ein Rohbild von Partikeln speichert;
ein Rezept-Speicherabschnitt (3) mehrere Bildverarbeitungsrezepte speichert, die sich zumindest in den Bildverarbeitungsalgorithmen unterscheiden;
ein Testbereich-Einstellabschnitt (4) einen Testbereich (TR) in dem Rohbild, in dem der Bildverarbeitungsalgorithmus ausgeführt wird, basierend auf einer empfangenen Eingabe von einem Benutzer einstellt;
ein Testbild-Verarbeitungsabschnitt (5) die mehreren Bildverarbeitungsalgorithmen an einem Teil des Rohbildes (RP) ausführt, in dem der Testbereich (TR) basierend auf den mehreren Bildverarbeitungsrezepten eingestellt ist, die in dem Rezept-Speicherabschnitt gespeichert sind, und jeweilige Testergebnisbilder ausgibt;
ein Testergebnis-Anzeigeabschnitt gleichzeitig auf einer Anzeige die Testergebnisbilder mit den unterschiedlichen Bildverarbeitungsalgorithmen anzeigt, die jeweils von dem Testbild-Verarbeitungsabschnitt ausgegeben und ausgeführt werden;
ein Ausführungsrezept-Empfangsabschnitt (7) von einem Benutzer eine Auswahl des Bildverarbeitungsrezepts empfängt, das auf dem gesamten Rohbild (RP) auszuführen ist, nachdem jedes Testergebnisbild (TP) der Liste durch den Testergebnis-Anzeigeabschnitt (6) angezeigt worden ist;
ein Endbild-Verarbeitungsabschnitt (8) basierend auf dem Bildverarbeitungsrezept, das an dem Ausführungsrezept-Empfangsabschnitt (7) empfangen wird, eine Bildverarbeitung an dem gesamten Rohbild (RP) oder einem gesamten anderen Rohbild der Partikel ausführt und ein Endbild (FP) ausgibt; und
ein Endergebnis-Anzeigeabschnitt (9) das Endbild (FP) anzeigt.

## Revendications

1. Appareil d'analyse de particules (102) comprenant :
une section de stockage d'image brute (1) stockant une image brute (RP) de particules ;
une section de stockage de recettes (3) stockant une pluralité de recettes de traitement d'image qui sont différentes dans au moins des algorithmes de traitement d'image ;
une section de définition de région de test (4) qui est configurée pour définir, sur la base d'une entrée reçue d'un utilisateur, une région de test (TR) dans l'image brute (RP) où l'algorithme de traitement d'image est exécuté ;
une section de traitement d'image de test (5) configurée pour exécuter la pluralité d'algorithmes de traitement d'image sur une partie de l'image brute (RP) où la région de test (TR) est définie sur la base de la pluralité de recettes de traitement d'image stockées dans la section de stockage de recettes (3) et pour délivrer des images de résultat de test respectives (TP) ;
une section d'affichage de résultat de test (6) configurée pour afficher une liste des images de résultat de test (TP) avec les différents algorithmes de traitement d'image, chacun délivré et exécuté par la section de traitement d'image de test (5) ;
une section de réception de recette d'exécution (7) configurée pour recevoir, à partir d'un utilisateur, une sélection de la recette de traitement d'image à exécuter sur l'image brute entière (RP) après que chaque image de résultat de test (TP) de la liste a été affichée par la section d'affichage de résultat de test (6) ;
une section de traitement d'image finale (8) configurée pour exécuter, sur la base de la recette de traitement d'image reçue au niveau de la section de réception de recette d'exécution (7), un traitement d'image sur l'image brute (RP) entière ou sur une autre image brute entière des particules et pour délivrer une image finale (FP) ; et
une section d'affichage de résultat final (9) configurée pour afficher l'image finale (FP).

2. Appareil d'analyse de particules (102) selon la revendication 1, dans lequel
la section de définition de région de test (4) est configurée de manière à définir une position, une taille, ou une forme de la région de test dans l'image brute (RP).

3. Appareil d'analyse de particules (102) selon la revendication 1, dans lequel
la recette de traitement d'image comporte : l'algorithme de traitement d'image et un paramètre de réglage de l'algorithme de traitement d'image.

4. Appareil d'analyse de particules (102) selon la revendication 1, comprenant en outre :
une section d'analyse (10) configurée pour analyser une propriété de particules des particules dans l'image finale sur la base de l'image finale ; et
une section de comparaison (11) configurée pour comparer une propriété de particules des particules mesurées sur la base de différents principes de mesure issus des principes de mesure de l'appareil d'analyse de particules (102) avec la propriété de particules analysée sur la base de l'image finale (FP) au niveau de la section d'analyse (10).

5. Système d'analyse de particules (200) comprenant :
l'appareil d'analyse de particules (102) selon la revendication 1 ; et
un dispositif d'observation de particules comportant un mécanisme d'imagerie (DC) pour imager des particules, dans lequel
la section de stockage d'image brute (1) est configurée de manière à stocker, en tant qu'image brute (RP), une image imagée dans le dispositif d'observation de particules.

6. Programme d'appareil d'analyse de particules amenant un ordinateur à exercer des fonctions de sorte que :
une section de stockage d'image brute (1) stocke une image brute de particules ;
une section de stockage de recettes (3) stocke une pluralité de recettes de traitement d'image qui sont différentes dans au moins des algorithmes de traitement d'image ;
une section de définition de région de test (4) définit, sur la base d'une entrée reçue à partir d'un utilisateur, une région de test (TR) dans l'image brute où l'algorithme de traitement d'image est exécuté ;
une section de traitement d'image de test (5) exécute la pluralité d'algorithmes de traitement d'image sur une partie de l'image brute (RP) où la région de test (TR) est définie sur la base de la pluralité de recettes de traitement d'image stockées dans la section de stockage de recettes et délivre des images de résultat de test respectives ;
une section d'affichage de résultat de test affiche simultanément, sur un écran, les images de résultat de test avec les différents algorithmes de traitement d'image, chacun délivré et exécuté par la section de traitement d'image de test ;
une section de réception de recette d'exécution (7) reçoit, à partir d'un utilisateur, une sélection de la recette de traitement d'image à exécuter sur l'image brute entière (RP) après que chaque image de résultat de test (TP) de la liste a été affichée par la section d'affichage de résultat de test (6) ;
une section de traitement d'image finale (8) exécute, sur la base de la recette de traitement d'image reçue au niveau de la section de réception de recette d'exécution (7), un traitement d'image sur l'image brute (RP) entière ou sur une autre image brute entière des particules et délivre une image finale (PF) ; et
une section d'affichage de résultat final (9) affiche l'image finale (FP).
